(19) Europäisches Patentamt
European Patent Office
Office européen des brevets

(11) EP 2 709 838 B1

(12) **FASCICULE DE BREVET EUROPEEN**

(45) Date de publication et mention de la délivrance du brevet:
**04.03.2015 Bulletin 2015/10**

(21) Numéro de dépôt: **12720888.2**

(22) Date de dépôt: **15.05.2012**

(51) Int Cl.:
***B29D 30/52*** *(2006.01)* ***B60C 11/18*** *(2006.01)*
***C08L 21/00*** *(2006.01)* ***D02G 3/48*** *(2006.01)*
***B29C 47/02*** *(2006.01)*

(86) Numéro de dépôt international:
**PCT/EP2012/059030**

(87) Numéro de publication internationale:
**WO 2012/156407 (22.11.2012 Gazette 2012/47)**

(54) **CORDON COMPOSITE CAOUTCHOUTEUX POUR BANDE DE ROULEMENT DE BANDAGE PNEUMATIQUE**

KAUTSCHUKVERBUNDCORD FÜR DIE LAUFFLÄCHE EINES LUFTREIFENS

RUBBER COMPOSITE CORD FOR A TREAD OF A PNEUMATIC TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2011 FR 1154317**

(43) Date de publication de la demande:
**26.03.2014 Bulletin 2014/13**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **HIDROT, Jean-Denis**
  **F-63040 Clermont-Ferrand cedex 9 (FR)**
- **ABAD, Vincent**
  **F-63040 Clermont-Ferrand cedex 9 (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**WO-A1-2011/141669**
**GB-A- 506 142**
**US-A- 2 544 868**
**US-A- 5 804 307**
**US-A1- 2003 034 104**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 709 838 B1

Printed by Jouve, 75001 PARIS (FR)

## Description

### Domaine de l'invention

La présente invention est relative aux bandages pneumatiques, et plus particulièrement à un cordon composite caoutchouteux de recreusage pour bande de roulement d'un bandage pneumatique et à un bandage pneumatique dont la bande de roulement incorpore un tel cordon composite caoutchouteux de recreusage.

### Etat de la technique

Dans la très grande majorité des cas, les sculptures de bandes de roulement pour pneumatique pour véhicule poids lourd sont pourvues de rainures circonférentielles, rectilignes, en zigzag ou ondulées, ces rainures pouvant être réunies par des rainures et/ou incisions transversales. Les rainures circonférentielles comportent généralement des témoins d'usure, petites plates-formes de mélange caoutchouteux vulcanisé (ou gomme) couvrant sur une certaine longueur circonférentielle le fond de ces rainures, le témoin indiquant la profondeur de sculpture minimale qui doit légalement rester sur la bande de roulement en utilisation. Les sculptures pour véhicules poids lourd sont recreusables (opération par laquelle on peut recreuser de nouvelles rainures), et les pneumatiques ayant de telles sculptures portent sur leurs flancs la mention anglaise "Regroovable" ou le symbole "U". Le recreusage permet d'une part de prolonger le potentiel d'adhérence du pneumatique poids lourd et d'autre part d'accroître de façon importante le rendement kilométrique : de 15 à 30% selon les cas et cela sans pénaliser la possibilité de rechapage, qui est par ailleurs une caractéristique essentielle d'un pneumatique poids lourd.

Comme connu en soi, le recreusage d'une rainure peut s'effectuer à l'aide d'une lame arrondie chauffante, manipulée encore souvent par un opérateur. Ladite lame, reliée à un bâti qui prend appui sur la surface de bande de roulement, peut être utilisée manuellement de façon à suivre assez fidèlement le tracé de la rainure sur la surface de la bande de roulement, même dans le cas d'une rainure à tracé non rectiligne. Cette opération de recreusage requiert cependant un certain nombre de précautions. La première d'entre elles consiste à effectuer l'opération de recreusage lorsqu'il reste environ 2 mm de profondeur de rainure, ladite profondeur étant mesurée entre la surface de bande de roulement et la surface radialement extérieure des témoins d'usure placés en fond de rainure. Cette précaution permet une bonne visualisation du dessin de sculpture et ainsi de le reproduire sans difficulté majeure. Connaissant la profondeur de sculpture restante et la profondeur de recreusage préconisée par le manufacturier de pneumatiques, il est alors possible d'ajuster et de régler la hauteur de la lame de recreusage.

Les profondeurs de recreusage généralement indiquées sont des profondeurs théoriques. Si elles sont, dans une majorité de cas, satisfaisantes, et permettent de régler théoriquement la hauteur de lame pour conserver approximativement une certaine épaisseur de gomme entre le fond de rainure recreusée et la face radialement supérieure de l'armature de sommet, les risques d'un recreusage trop profond ne sont pas exclus. Or un recreusage trop poussé peut entraîner des dommages et compromettre la possibilité d'un rechapage économique, c'est-à-dire un rechapage où seule la bande de roulement est changée. Il peut aussi, dans certains cas extrêmes, laisser apparaître, au fond des nouvelles rainures après recreusage, les nappes de l'armature de sommet radialement sous-jacente, ce qui n'est pas admis de manière générale par les législations en vigueur.

Afin de permettre la réalisation d'un recreusage respectant précisément la présence d'une épaisseur de caoutchouc, au-dessus de la face radialement extérieure de l'armature de sommet, minimale et fixée par le manufacturier de pneumatiques, tout en permettant d'accroître au maximum le rendement kilométrique du pneumatique, le brevet US 6 003 576 préconise, dans un pneumatique comprenant une armature de carcasse radiale surmontée radialement d'une armature de sommet formée d'au moins une nappe d'éléments de renforcement, et une bande de roulement pourvue de rainures pouvant être recreusées, de munir les parties de bande de roulement, disposées radialement sous les rainures recreusables, d'indicateurs de profondeur, chaque indicateur comprenant au moins un moyen indiquant la profondeur minimale à atteindre pour un recreusage efficace et la profondeur maximale ne devant en aucun cas être dépassée.

Les indicateurs de profondeur se présentent préférentiellement sous forme d'incisions de largeur faible non nulle placées en fond de rainure soit parallèle à la direction de ladite rainure, soit perpendiculaire à ladite direction, soit les deux simultanément, le moyen indiquant les profondeurs minimale et maximale étant alors la forme géométrique du fond de l'incision indicatrice de profondeur.

Bien qu'ayant conduit à d'énormes progrès dans l'art et la manière de recreuser une bande de roulement, les indicateurs de recreusage n'enlèvent pas, malgré la mécanisation poussée et la robotisation, le risque de passage d'une lame de découpe très près des nappes de l'armature de sommet ; ces indicateurs ne suppriment pas la présence humaine pour les réglages de profondeur. Par ailleurs, le recreusage est réalisé radialement sous les rainures originelles, conçues en fonction d'une épaisseur de bande de roulement neuve, et non en fonction d'une bande de roulement dont l'épaisseur a fortement diminué et dont le dessin de sculpture optimal n'est pas obligatoirement le dessin conçu pour

l'épaisseur normale de bande de roulement.

Il a également été proposé (US 2 148 343, US 2003/034104, US 2 544 868) d'incorporer dans la bande de roulement du pneumatique neuf une pluralité de cordons disposés à l'intérieur de ladite bande dans le sens circonférentiel. Dès que l'usure de la bande atteint les cordons ces derniers sont éjectés par la force centrifuge et de nouvelles rainures sont alors formées.

Le document EP 1 392 497 B1 propose une bande de roulement comportant intérieurement des intercalaires dont la paroi extérieure vue en section méridienne a en partie un contour identique au contour de la paroi d'une rainure de recreusage à créer. Les intercalaires ont la propriété d'être anti-collants avec le mélange caoutchouteux de la bande de roulement. Ces intercalaires sont munis d'orifices pour créer lors du moulage de l'ébauche du bandage pneumatique des ponts de mélange caoutchouteux entre le matériau de la rainure de recreusage à créer et le reste de la bande de roulement. Ces ponts de gomme empêchent l'éjection du matériau de la rainure de recreusage à créer lorsqu'il arrive en contact avec le sol par usure de la bande de roulement, tout en permettant son extraction par un opérateur par rupture de ces ponts de mélange caoutchouteux.

Le procédé de fabrication de cette bande de roulement est cependant long, complexe et coûteux puisqu'il faut notamment mettre successivement en place dans l'ébauche de bande de roulement les intercalaires puis les profilés caoutchouteux correspondant aux cordons de recreusage.

Le document US 5 804 307 propose un cordon composite comportant un coeur caoutchouteux et une gaine caoutchouteuse entourant, au moins en partie, le coeur, les formulations du coeur et de la gaine étant différentes.

Dans ce qui suit, on entend par « cordon » ou « jonc » un profilé caoutchouteux de section droite sensiblement constante et dont la longueur est très supérieure à toute autre dimension, et par « cordon de recreusage » un profilé caoutchouteux destiné à être inséré dans une cavité interne d'une bande de roulement d'un bandage en cours de fabrication, puis à être retirée après usure de la bande de roulement en service pour créer une rainure de recreusage circonférentielle. Le cordon de recreusage après insertion dans la bande de roulement forme un anneau circonférentiel continu. Cet anneau peut être rectiligne, en zigzag ou ondulé selon les cas.

**Description brève de l'invention**

L'invention a pour objet un cordon composite comportant un coeur caoutchouteux et une gaine caoutchouteuse entourant, au moins en partie, le coeur, les formulations du coeur et de la gaine étant distinctes, caractérisé en ce que ledit coeur caoutchouteux est à base d'au moins :

- un élastomère diénique ; et
- plus de 30 pce d'une charge notée A dont les particules sont des nanoparticules dont la taille moyenne (en masse) est inférieure à 500 nm ;

  et en ce que ladite gaine caoutchouteuse est à base d'au moins :
- un élastomère diénique identique ou différent du premier ;
- de 0 à moins de 30 pce de charge A' identique ou différente de la charge A, dont les particules sont des nanoparticules dont la taille moyenne en masse est inférieure à 500 nm ; et
- plus de 70 pce d'une charge notée B dont les particules sont des microparticules dont la taille médiane en masse est supérieure à 1 $\mu$m.

Par «pce», on entend: partie en poids pour cent parties d'élastomère.

Ce cordon composite est utilisable comme cordon de recreusage d'une bande de roulement d'un bandage pneumatique.

La gaine caoutchouteuse permet d'assurer un ancrage mécanique suffisant du cordon composite pour qu'il ne soit pas éjecté en cours de roulage et pour éviter tout mouvement relatif de ce cordon composite vis-à-vis du reste de la bande de roulement, mouvement source de frottements et donc de dissipation thermique à l'interface.

La gaine caoutchouteuse présente aussi l'avantage de pouvoir se déchirer manuellement sans outillage spécifique une fois que le cordon est visible par usure de la bande de roulement du bandage pneumatique et ainsi de permettre une extraction aisée et précise du cordon composite de recreusage en conservant intact le coeur caoutchouteux du cordon notablement plus résistant aux fissures.

De préférence, chaque élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

Selon un aspect préférentiel, la charge A ou la charge A' comporte du noir de carbone.

La charge A ou la charge A' peut aussi comporter en complément du noir de carbone ou en remplacement une charge inorganique telle de la silice.

Avantageusement, la quantité de charge A' dans la gaine caoutchouteuse est inférieure à 10 pce, et très

préférentiellement inférieure à 5 pce.

Avantageusement, la quantité de charge B dans la gaine caoutchouteuse est supérieure à 100 pce et très préférentiellement comprise entre 200 et 600 pce.

Avantageusement, la charge B présente une taille médiane de particules comprise entre 1 et 200 μm et très préférentiellement entre 5 et 100 μm.

La charge B peut avantageusement être choisie dans le groupe constitué par la craie, les carbonates de calcium synthétiques, le kaolin et les mélanges de tels composés.

Les cordons selon un mode de réalisation de l'invention sont tels que leur plus grande dimension dans toute section droite est comprise entre 3 et 20 mm et préférentiellement entre 5 et 15 mm.

Ces dimensions de cordons permettent de créer après leur enlèvement de la bande de roulement des rainures ou sillons de largeur axiale comprise entre 3 et 15 mm, ce qui redonne à la sculpture du bandage une excellente capacité d'évacuation de l'eau en roulage sur sol mouillé.

En deçà de 3 mm, l'efficacité des cordons n'est plus suffisante et au-delà de 15 mm, le gain apporté n'est plus sensible.

Selon un mode de réalisation, l'épaisseur de la gaine caoutchouteuse est comprise entre 0,3 et 1,5 mm et de préférence entre 0,5 et 1,0 mm.

Préférentiellement, le coeur caoutchouteux et la gaine caoutchouteuse comportent en plus un système de vulcanisation et ledit cordon composite est non-vulcanisé.

Après mise en place du cordon composite non-vulcanisé dans une cavité de bande de roulement d'une ébauche de bandage pneumatique, c'est lors de l'opération de vulcanisation de l'ébauche de bandage pneumatique qu'une liaison mécanique se réalise entre le cordon composite et le reste de la bande de roulement par interdiffusion et covulcanisation. Cette liaison mécanique du cordon composite avec le reste de la bande de roulement a l'avantage d'être continue et homogène tout autour du cordon de recreusage.

Selon un autre mode de réalisation, le coeur caoutchouteux et la gaine caoutchouteuse comportant en plus un système de vulcanisation, ledit cordon composite est pré-vulcanisé.

Par « pré-vulcanisé » on veut dire que le cordon composite subit avant son incorporation dans une cavité de bande de roulement d'une ébauche de bandage pneumatique une première opération de vulcanisation ou réticulation suffisante pour faire quitter au cordon composite l'état plastique caractéristique des mélanges caoutchouteux non vulcanisés. La vulcanisation du cordon composite n'est pas complète pour permettre une bonne liaison mécanique de la gaine caoutchouteuse avec la bande de roulement adjacente dans l'ébauche de bandage pneumatique par interdiffusion et covulcanisation lors de l'opération de vulcanisation de ladite ébauche.

Cette état pré-vulcanisé permet de conserver pendant toutes les opérations d'incorporation dans la bande de roulement, de moulage et de vulcanisation de l'ébauche du bandage pneumatique, la géométrie du cordon de recreusage, notamment lorsque le coeur caoutchouteux comporte un copolymère de butadiène.

Préférentiellement, la gaine caoutchouteuse entoure plus de 50 % de la surface extérieure du coeur. La gaine peut aussi entourer l'ensemble du coeur.

La gaine caoutchouteuse peut avoir une forme de tore ouvert. La gaine est alors en une seule partie mais n'entoure pas complètement le coeur caoutchouteux pour laisser une zone de contact direct entre le coeur caoutchouteux et le matériau adjacent de la bande de roulement. Cette zone de contact s'étend axialement et favorise une bonne liaison mécanique entre le cordon composite et le mélange adjacent de la bande de roulement et ainsi renforce la tenue mécanique du cordon composite pendant toute l'utilisation du bandage pneumatique avant l'extraction du cordon composite.

A titre d'exemple, le cordon composite peut avoir un contour de section droite carrée, rectangulaire ou en forme de U, et la gaine caoutchouteuse peut être disposée le long de trois côtés du carré ou du rectangle ou des deux branches et du fond du U.

Le cordon peut aussi avoir un contour de section droite sensiblement circulaire.

Selon un autre mode de réalisation, le cordon composite est tel que la gaine caoutchouteuse comporte deux parties disjointes. La gaine est ainsi en deux parties et laisse deux zones de contact direct entre le coeur caoutchouteux et le mélange adjacent de la bande de roulement. Ce mode de réalisation renforce la tenue mécanique du cordon composite pendant toute l'utilisation du bandage pneumatique avant l'extraction du cordon.

Lorsque le cordon composite a un contour de section droite carrée, ou rectangulaire, ou en forme de U, la gaine caoutchouteuse est alors de préférence disposée le long de deux côtés opposés du carré ou du rectangle, ou le long des deux branches du U seulement. Cela laisse deux zones de contact direct, s'étendant axialement, entre le coeur et le mélange de la bande de roulement.

La section droite du cordon composite peut être de toute forme, notamment sensiblement circulaire.

La gaine caoutchouteuse peut aussi comporter des discontinuités axiales. Cela permet de renforcer localement la liaison mécanique du cordon composite avec le matériau adjacent de la bande de roulement.

L'invention a aussi pour objet un bandage pneumatique ou non-pneumatique avec un sommet avec une armature de sommet surmontée d'une bande de roulement, caractérisé en ce que ladite bande de roulement comporte dans au moins une cavité circonférentielle de ladite bande de roulement un cordon composite tel que précédemment décrit.

L'invention concerne particulièrement les bandages destinés à équiper des véhicules industriels choisis parmi camionnettes, « Poids lourd » - c'est-à-dire métro, bus, engins de transport routier (camions, tracteurs, remorques), véhicules hors la route tels qu'engins agricoles ou de génie civil -, autres véhicules de transport ou de manutention. L'invention peut aussi s'appliquer aux bandages de véhicules à moteur de type tourisme, SUV ("*Sport Utility Vehicles*"), deux roues (notamment motos), avions...

Les cordons composites selon l'invention sont utilisables pour des bandages pneumatiques, c'est-à-dire gonflés d'air mais aussi pour des bandages non-pneumatiques, c'est-à-dire dont le port de la charge est assuré de façon structurelle et non pneumatique.

**Description détaillée de l'invention**

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Par « pce », on entend : partie en poids pour cent parties d'élastomère.

On entend par l'expression composition « à base de », une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa fabrication et de sa réticulation ou vulcanisation.

**Mesures et tests utilisés**

Caractérisation des charges

La taille moyenne (en masse) des nanoparticules, notée $d_w$, est mesurée de manière classique après dispersion, par désagglomération aux ultrasons, de la charge à analyser dans l'eau ou une solution aqueuse contenant un agent tensioactif.

Pour une charge inorganique telle que silice, la mesure est réalisée au moyen d'un sédimentomètre centrifuge à détection rayons X type « XDC » (X-rays Disk Centrifuge), commercialisé par la société Brookhaven Instruments, selon le mode opératoire qui suit. On réalise une suspension de 3,2 g d'échantillon de charge inorganique à analyser dans 40 ml d'eau, par action durant 8 minutes, à 60% de puissance (60% de la position maxi du *"output control"*), d'une sonde ultrasons de 1500 W (sonificateur Vibracell 3/4 pouce commercialisé par la société Bioblock); après sonification, on introduit 15 ml de la suspension dans le disque en rotation ; après sédimentation pendant 120 minutes, la distribution en masse des tailles de particules et la taille moyenne en masse des particules $d_w$ sont calculées par le logiciel du sédimentomètre XDC ( $d_w = \sum(n_i \times d_i^5) / \sum(n_i \times d_i^4)$ ) avec $n_i$ nombre d'objets de la classe de taille ou diamètre $d_i$).

Pour du noir de carbone, on opère avec une solution aqueuse à 15% d'éthanol et 0,05% d'un agent tensioactif non ionique (% en volume). La détermination a lieu au moyen d'un photosédimentomètre centrifuge type « DCP » (Disk Centrifuge Photosedimentometer commercialisé par la société Brookhaven Instruments). Une suspension de 10 mg de noir de carbone est préalablement réalisée dans 40 ml d'une solution aqueuse à 15% d'éthanol et 0,05% d'un agent tensioactif non ionique (% en volume), par action durant 10 minutes à 60% de puissance (soit 60 % de la position maxi du "tip amplitude") d'une sonde ultrasons de 600 W (Sonificateur Vibracell 1/2 pouce commercialisé par la société Bioblock). Pendant la sonification, un gradient composé de 15 ml d'eau (à 0,05% d'un tensioactif non ionique) et de 1 ml d'éthanol est injecté dans le disque du sédimentomètre en rotation à 8000 tours/min afin de constituer un *"step gradient"*. Ensuite, 0,3 ml de la suspension de noir de carbone est injecté à la surface du gradient ; après sédimentation durant 120 min, la distribution en masse des tailles de particule et la taille moyenne en masse $d_w$ sont calculées par le logiciel du sédimentomètre, comme indiqué ci-dessus.

Quant à la mesure de la taille des microparticules (particules non renforçantes), on peut utiliser de manière simple une analyse de la granulométrie par un tamisage mécanique. L'opération consiste à tamiser une quantité définie

d'échantillon (par exemple 200 g) sur une table vibrante pendant 30 min avec des diamètres de tamis différents (par exemple, avec une série de 10 à 15 mailles variant progressivement de 5 à 300 μm) ; les refus récoltés sur chaque tamis sont pesés sur une balance de précision ; on en déduit le % de refus pour chaque diamètre de maille par rapport au poids total de produit, la taille médiane en poids (ou diamètre médian apparent) est finalement calculée de manière connue à partir de l'histogramme de la distribution granulométrique.

Essais de traction

Ces essais permettent de déterminer les contraintes d'élasticité et les propriétés à la rupture des mélanges caoutchouteux. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les modules sécants nominaux (ou contraintes apparentes, en MPa) à 10% d'allongement (noté MA10). On mesure également les contraintes nominales (en MPA) et les allongements à la rupture (AR en %). Toutes ces mesures de traction sont effectuées dans les conditions normales de température (23 ± 2°C) et d'hygrométrie (50 ± 5% d'humidité relative), selon la norme française NF T 40-101 (décembre 1979).

**Conditions de réalisation de l'invention**

Le cordon composite caoutchouteux selon un objet de l'invention a pour caractéristique essentielle de comporter un coeur caoutchouteux à base d'au moins un élastomère diénique et plus de 30 pce d'une charge A dont les particules sont des nanoparticules dont la taille moyenne en masse est inférieure à 500 nm et une gaine caoutchouteuse à base d'au moins un élastomère diénique identique ou différent du premier, de 0 à moins de 30 pce de charge A' et plus de 70 pce d'une charge B dont les particules sont des microparticules dont la taille médiane en masse est supérieure à 1 μm.

On peut aussi dire que le coeur du cordon composite caoutchouteux comporte au moins un élastomère diénique et plus de 30 pce d'une charge A composée de nanoparticules et que la gaine caoutchouteuse comporte au moins un élastomère diénique, de 0 à moins de 30 pce de charge A' et plus de 70 pce de charge B.

Elastomère diénique

Par élastomère ou caoutchouc « diénique », doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Chaque élastomère diénique du coeur caoutchouteux et de la gaine caoutchouteuse est choisi préférentiellement dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Conviennent notamment les polybutadiènes ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse, mesurée selon ASTM D3418) entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans

le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (préférentiellement pour plus de 50 pce) un élastomère isoprénique. Par « élastomère isoprénique », on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, le coeur caoutchouteux et/ou la gaine caoutchouteuse comprennent un coupage d'un (un ou plusieurs) élastomère diénique dit « à haute Tg » présentant une Tg comprise entre - 70°C et 0°C et d'un (un ou plusieurs) élastomère diénique dit « à basse Tg » présentant une Tg comprise entre - 110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition du coeur caoutchouteux et/ou de la gaine caoutchouteuse comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution ou en émulsion.

Selon un autre mode particulier de réalisation de l'invention, l'élastomère diénique des compositions du coeur et/ou de la gaine comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions formulées selon l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquences, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilanes (tels que décrits par exemple dans FR 2 765 882 ou US 5 977 238), des groupes alkoxysilane portant un groupement amine (tels que décrits par exemples dans US 2005/0203251, JP 2001158834, JP 2005232367, EP 1 457 501 A1, WO 09/133068), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Lorsque l'élastomère diénique est du caoutchouc naturel, celui-ci peut avoir subi un traitement ou une modification physique ou chimique directement sur son site de production ou encore ultérieurement avant ou pendant la préparation de la composition de caoutchouc. Ces opérations sont bien connues de l'homme de l'art et peuvent à titre d'exemple consister en un traitement enzymatique, modification chimique par adjonction de composés spécifiques.

Charge A

Le cordon composite selon un objet de l'invention a pour caractéristique essentielle de comporter d'une part un coeur caoutchouteux avec plus de 30 pce de charge A, renforçante, et d'autre part une gaine caoutchouteuse avec de 0 à moins de 30 pce de charge A', renforçante.

On peut utiliser tout type de charge renforçante connue pour ses capacités à renforcer une composition de caoutchouc utilisable pour la fabrication de bandes de roulement de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à l'élastomère sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » *("non-black filler")* par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites « HDS »), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387.

La charge inorganique renforçante utilisée, en particulier s'il s'agit de silice, a de préférence une surface BET comprise entre 45 et 400 $m^2/g$, plus préférentiellement comprise entre 60 et 300 $m^2/g$.

De manière préférentielle, pour le coeur caoutchouteux, le taux de charge renforçante A total (noir de carbone et/ou charge inorganique renforçante telle que silice) est supérieur à 30 pce et préférentiellement compris entre 40 et 100 pce ; cela permet d'assurer au coeur caoutchouteux du cordon composite une bonne résistance à la fissuration tout en conservant une faible hystérésis.

De façon préférentielle, pour la gaine caoutchouteuse, le taux de charge renforçante A' totale est inférieur à 10 pce, plus préférentiellement compris entre 2 et 5 pce. Cela permet d'assurer un bon comportement à cru de la gaine caoutchouteuse, sans conférer de résistance à la rupture notable.

De manière préférentielle, la taille moyenne (en masse) des nanoparticules est comprise entre 20 et 200 nm, plus préférentiellement entre 20 et 150 nm.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits « symétriques » répondant à la formule générale (I) suivante:

(I) $Z - A - S_x - A - Z$ , dans laquelle :

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le

propylène) ;

- Z répond à l'une des formules ci-après :

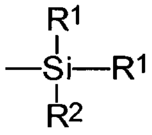 ; 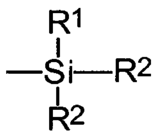 ; 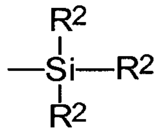 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de coeur caoutchouteux selon un objet de l'invention, la teneur en agent de couplage est préférentiellement comprise entre 4 et 12 pce, plus préférentiellement entre 3 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Charge B

La gaine caoutchouteuse du cordon composite a pour seconde caractéristique essentielle de comporter, à titre de charge non renforçante (notée charge B), plus de 70 pce de microparticules dont la taille moyenne (en masse) est supérieure à 1 $\mu$m.

En dessous des minima ci-dessus, tant pour le taux que pour la taille des microparticules, l'effet technique visé n'est pas obtenu ; on observe alors une résistance à la fissuration trop forte de la gaine caoutchouteuse du cordon composite et un opérateur ne peut plus retirer sans outil particulier le cordon de recreusage de sa cavité.

Le taux de microparticules est préférentiellement supérieur à 100 pce, plus préférentiellement compris entre 200 et 600 pce et leur taille médiane est de préférence comprise entre 1 et 200 $\mu$m, plus particulièrement entre 5 et 100 $\mu$m. Au-delà des maxima indiqués, tant pour le taux que pour la taille des microparticules, on s'expose à un risque de cohésion insuffisante en service de la gaine caoutchouteuse qui ne peut plus alors garantir en service un bon ancrage continu et homogène du cordon de recreusage dans la cavité de la bande de roulement.

Pour toutes les raisons indiquées précédemment, le taux des microparticules est plus préférentiellement compris entre 300 et 500 pce, leur taille médiane est plus préférentiellement comprise entre 10 et 50 $\mu$m.

Les charges non renforçantes utilisables comme charge B sont connues de l'homme du métier, on citera notamment :

- carbonates de calcium naturels (craie) ou synthétiques, silicates naturels (kaolin, talc, mica), silices broyées, alumines, silicates, aluminosilicates ;
- des composés biodégradables tels que polyester-amide, amidon, acide polylactique, des dérivés de la cellulose

(par exemple acétate de cellulose, lignine).

Plus préférentiellement, on utilise des microparticules de charge B choisies dans le groupe constitué par la craie, les carbonates de calcium synthétiques, le kaolin et les mélanges de tels composés.
A titre d'exemples de telles charges B préférentielles et disponibles commercialement, on peut citer par exemple la craie vendue sous la dénomination « Omya BLS » par la société Omya, les kaolins vendus sous la dénomination « Polwhite KL » par la société Imerys.

Additifs divers

Les compositions du coeur caoutchouteux et de la gaine caoutchouteuse peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.
L'ajout de pigments a l'avantage d'indiquer clairement lorsque le niveau d'usure atteint le cordon de recreusage.
Le coeur caoutchouteux peut également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.
Le coeur caoutchouteux peut également comporter, à titre d'agent plastifiant préférentiel non aromatique ou très faiblement aromatique, au moins un composé choisi dans le groupe constitué par les huiles naphténiques, paraffiniques, huiles MES, huiles TDAE, les plastifiants esters (par exemple les trioléates de glycérol), les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés. Le taux global d'un tel agent plastifiant préférentiel est de préférence compris entre 10 et 100 pce, plus préférentiellement compris entre 20 et 80 pce, notamment dans un domaine de 10 à 50 pce.
Parmi les résines plastifiantes hydrocarbonées ci-dessus (on rappelle que l'appellation « résine » est réservée par définition à un composé solide), on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec des huiles plastifiantes comme par exemple des huiles MES ou TDAE.

**Description des Figures**

Les figures annexées illustrent une machine de réalisation d'une bande de roulement avec cordon de recreusage incorporé ainsi que de telles bandes de roulement :

- les figures 1 et 2 sont deux vues respectivement en perspective et en coupe verticale transversale d'un nez d'une machine de réalisation d'une bande de roulement avec cordon de recreusage ;
- les figures 3 et 4 sont deux vues respectivement en perspective et de face de la lame de la machine de la figure 1 ;
- la figure 5 est une vue en section de la bande de roulement obtenue par le passage sous la lame de la figure 3 ;
- la figure 6 est une vue analogue à la figure 1 montrant l'implantation de la lame de la figure 3 sur la machine ;
- les figures 7 et 8 sont deux vues analogues à la figure 5 montrant sur deux bandes de roulement de bandages pneumatiques différents les cordons introduits dans les sillons ;
- la figure 9 est une vue analogue à la figure 6 montrant les organes de guidage des cordons dans les sillons sur la machine ;
- la figure 10 est une vue en élévation de la partie de la machine illustrée à la figure 9 ;
- les figures 11 et 12 sont des vues analogues aux figures 7 et 8 montrant la section de la bande de roulement lorsque les sillons sont refermés ;
- la figure 13 est une vue analogue à la figure 9 montrant les organes de comblement de la machine de la figure 1 ;
- la figure 14 est une vue en perspective de l'un de ces organes ;
- la figure 15 est une vue en coupe transversale de la bande de roulement du bandage pneumatique fabriquée au moyen de la machine ;
- les figures 16 à 18 présentent des modes de réalisation de cordons composites à sections droites circulaires ;

- les figures 19 à 21 présentent des modes de réalisation de cordons composites à sections droites en formes de U ; et
- la figure 22 présente un autre mode de réalisation d'un cordon composite.

**Exemples de réalisation de l'invention**

Fabrication du cordon composite

Les compositions du coeur caoutchouteux et de la gaine caoutchouteuse sont fabriquées dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour préparer une composition du coeur caoutchouteux et/ou de la gaine caoutchouteuse comporte par exemple au moins les étapes suivantes :

- incorporer à un élastomère diénique, au cours d'une première étape (dite « non-productive »), le ou les charges, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite « productive »), le système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère diénique, charges et agent de couplage si nécessaire, système de plastification), puis dans un deuxième temps, par exemple après une à deux minutes de malaxage, les autres additifs, éventuels agents de recouvrement ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation peuvent venir s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc.. Le taux de soufre est par exemple compris entre 0,5 et 3,0 pce, celui de l'accélérateur primaire entre 0,5 et 5,0 pce.

Les compositions finales du coeur caoutchouteux et de la gaine caoutchouteuse peuvent ensuite être calandrées, par exemple sous la forme de feuilles ou de plaques. Ces produits intermédiaires sont ensuite extrudés en une ou plusieurs opérations et de préférence co-extrudées en une opération, pour donner la géométrie finale du cordon composite, adaptée à son incorporation dans une cavité d'une bande de roulement de bandage pneumatique. Les cordons composites peuvent alors être enroulés autour de bobines.

Les cordons précédemment décrits sont utilisables pour être disposés dans toute cavité interne de bande de roulement de bandages pneumatiques pour véhicule automobile tel qu'un véhicule de type deux roues, tourisme ou industriel.

La figure 16 présente une vue en coupe d'un premier mode de réalisation d'un cordon 80 à section circulaire. Ce cordon composite comporte un coeur 83 à section droite sensiblement circulaire et une gaine 84. La gaine 84 entoure complètement le coeur 83. Le diamètre du coeur 83 est de l'ordre de 3 à 10 mm et l'épaisseur de la gaine 84 est comprise entre 0,3 et 1,5 mm, de préférence entre 0,5 et 1,0 mm.

La figure 17 présente un deuxième mode de réalisation d'un cordon composite 81 à section sensiblement circulaire. Dans ce mode de réalisation, la gaine 85, en une seule partie, n'entoure pas complètement le coeur 83 mais laisse libre une zone 87 de la périphérie du coeur 83. La zone 87 s'étend axialement sur tout ou partie de la longueur

du cordon composite 81. En conséquence, après insertion du cordon composite dans une cavité de bande de roulement, cette partie 87 sera en contact direct avec le mélange adjacent de la bande de roulement et pourra être fortement lié à ce mélange par interdiffusion et covulcanisation. Cela renforce l'endurance de la liaison entre le cordon composite et le mélange de la bande de roulement en service.

La figure 18 présente un cordon composite 82 à section sensiblement circulaire. La gaine 86 de ce cordon composite 82 est en deux parties qui n'entourent pas complètement le coeur 83 et laissent libres deux zones 87 et 88. Les deux zones 87 et 88 étendent axialement sur tout ou partie du cordon composite 82. Comme dans le cas du cordon composite 81, les deux zones libres renforcent l'endurance en service de la liaison entre le cordon composite et le mélange de la bande de roulement. Les deux zones 87 et 88 sont de préférence axialement opposées.

La figure 19 présente un autre mode de réalisation d'un cordon composite 90 dont la section est en forme de U. Ce cordon composite 90 comporte un coeur 93 à section droite sensiblement en forme de U et une gaine 94. La gaine 94 entoure complètement le coeur 93. La hauteur des deux branches du U est de l'ordre de 5 à 12 mm et la distance entre le haut des deux branches du U est aussi de l'ordre de 5 à 12 mm. L'épaisseur de la gaine 94 est de l'ordre de 0,3 à 1,5 mm et de préférence comprise entre 0, 5 et 1,0 mm.

La figure 20 présente un deuxième mode de réalisation d'un cordon composite 91 à section sensiblement en forme de U. Dans ce mode de réalisation, la gaine 95, en une seule partie, n'entoure pas complètement le coeur 93 mais laisse libre une zone 97 de la périphérie du coeur 93. La gaine 95 s'étend sur les deux branches du U et le fond du U. La zone 97 s'étend axialement sur tout ou partie de la longueur du cordon composite 91. La partie 97 permet de renforcer l'endurance de la liaison entre le cordon composite et le mélange de la bande de roulement en service. Cette partie sans gaine 97 est de préférence disposée radialement le plus extérieurement dans la cavité de la bande de roulement.

La figure 21 présente un cordon composite 92 à section sensiblement en forme de U. La gaine 96 de ce cordon composite 92 est en deux parties qui n'entourent pas complètement le coeur 93 et laissent libres deux zones 97 et 98. Les deux parties de la gaine 96 s'étendent ici le long des deux branches du U. Les deux zones 97 et 98 s'étendent axialement sur tout ou partie du cordon composite 92. Comme dans le cas du cordon composite 91, les deux zones libres renforcent l'endurance en service de la liaison entre le cordon composite et le mélange de la bande de roulement. Les deux zones 97 et 98 sont axialement opposées.

La figure 22 présente en vue de côté un cordon composite 100. Ce cordon composite comporte un coeur 83 de section droite sensiblement circulaire, à titre illustratif, ainsi qu'une gaine caoutchouteuse 101. La gaine 101 ne s'étend pas axialement sur toute la longueur du cordon composite 100 mais s'interrompt de temps en temps pour laisser des zones libres 102 à la surface du coeur 83. Ces zones 102 permettent un contact direct entre le coeur et le mélange adjacent de la bande de roulement du bandage pneumatique. Dans l'exemple du cordon composite 100, les zones 102 font le tour du coeur 83.

Toute combinaison axiale et circulaire des zones libres 87, 88, 97, 98 et 102 est bien entendu possible. D'autres formes de section droites des cordons sont aussi possibles.

<u>Fabrication d'une bande de roulement avec cordon composite</u>

Selon un premier mode de réalisation connu en soi, on réalise une bande de roulement avec cordon composite incorporé dans une ou plusieurs cavités par co-extrusion. On extrude donc conjointement les cordons et la bande de roulement dans laquelle ils sont noyés.

Selon un second mode de réalisation :

- on extrude une bande de gomme ;
- on forme au moins un sillon dans la bande ;
- on fournit au moins un cordon composite à partir d'une bobine ; et
- on insère le cordon composite dans le ou chaque sillon.

Les cordons sont réalisés comme précédemment indiqué en préalable à la formation de la bande de gomme et séparément de cette dernière. Il suffit alors de les disposer dans le sillon et de refermer ce dernier. On enfouit donc les cordons dans la gomme suite à sa mise en forme. Ce procédé limite la quantité de rebuts pour défaut de fabrication en raison du fait qu'il permet de s'affranchir des étapes de stabilisation du procédé au lancement de chaque série de fabrication.

De préférence, pour chaque section de la bande, on extrude la section et on forme le sillon dans la section simultanément.

Nous allons décrire, en référence aux figures 1 à 14, un mode de réalisation d'une machine qui est, en l'espèce, une machine d'extrusion servant à la réalisation d'une bande de roulement pour la fabrication d'une ébauche crue de bandage pneumatique de véhicule.

On a illustré à la figure 15 une portion 2 d'une coupe d'un bandage pneumatique résultant de cette fabrication après vulcanisation de l'ébauche, la coupe étant prise dans un plan radial par référence à un axe de rotation 3 du bandage pneumatique. La bande de roulement ou bande 4 s'étend en périphérie du bandage pneumatique entre les flancs de ce dernier et sur sa carcasse 5, en périphérie de cette dernière. La bande 4 présente une face périphérique externe 6 formant la surface par laquelle le bandage pneumatique sera en contact avec le sol. Cette face a une forme générale cylindrique à section circulaire.

La bande 4 comprend un corps principal formé de gomme, laquelle comprend de façon classique un mélange d'élastomères naturel et synthétique ainsi que différents produits et adjuvants.

La bande 4 comprend en outre plusieurs cordons ou joncs 8 qui sont en l'espèce au nombre de cinq, ce nombre n'étant pas limitatif. Les cordons ont chacun une forme filaire, à section transversale circulaire comme c'est le cas aux figures 7, 11 et 15 ou carrée comme dans le cas des figures 8 et 12. Les cordons sont noyés dans le corps et s'étendent à distance des deux faces principales externe et interne de la bande. Chaque cordon composite forme un cercle coaxial au pneumatique et s'étend dans un plan perpendiculaire à l'axe 3. Les cordons peuvent avoir des profils transversaux identiques ou différents et peuvent être constitués de matériaux identiques ou différents. Les cordons sont réalisés individuellement, préalablement et séparément de la bande 4, puis enroulés sur des bobines 9 (voir fig. 2) qui sont ensuite amenées sur la machine.

Le nez 10 de la machine d'extrusion comporte un bâti 12 comprenant deux montants verticaux 14 de forme plane disposés parallèlement l'un à l'autre et en regard et à distance l'un de l'autre. La plupart des organes du nez s'étendent dans l'espace aménagé entre les deux montants 14.

Le nez comprend un conduit 16, illustré notamment en partie droite de la figure 2 et servant pour l'amenée de la gomme destinée à être extrudée pour former le corps. Le nez 10 comprend un cylindre ou rouleau 18 disposé à l'embouchure aval du conduit 16 et présentant une face périphérique cylindrique 23 à section circulaire. Le nez comprend en outre un ensemble de pièces 20 formant une voûte 22 qui délimite avec la face 23 une chambre 25 de mise en pression du matériau à extruder, sur laquelle débouche le conduit 16. Les pièces 20 sont rigidement fixées au bâti 12, tandis que le rouleau 18 est monté mobile à rotation par rapport aux montants 14 autour de son axe horizontal 24 dans le sens antihoraire sur la figure 2. Le nez 10 comprend une lame profilée 26 s'étendant en aval de la chambre 25 et en regard de la face 23 du rouleau. En aval de la lame, le nez comprend un ensemble 30 à roulettes de pose 32 servant à introduire les cordons dans les sillons réalisés préalablement, ainsi qu'un ensemble de roulettage 34 servant à refermer les sillons sur les cordons ainsi disposés.

En références aux figures 3 et 4, la lame profilée 26 comprend un corps principal 28 de forme allongée de l'un à l'autre des montants 14 et rigidement fixé à ceux-ci. Le corps 28 a une face inférieure 36 présentant des cavités et des reliefs et destinée à donner sa forme à la face supérieure 6 de la bande de roulement par l'effet du passage de la gomme entre cette face 36 et la face 23 du rouleau. Ces deux éléments forment ainsi un orifice d'extrusion qui confère sa forme à la section de la bande 4 lors du passage du matériau.

La lame 26 comprend de plus un support 38 portant des socs de charrue 40 dont le nombre égale celui des cordons 8 que la bande est destinée à recevoir, cinq en l'espèce. Comme illustré notamment à la figure 3, chacun des socs 40 présente une forme générale en « L », la partie la plus longue du « L » s'étendant dans une direction proche de la direction verticale et proche de la direction radiale à l'axe 24, et étant enfilée dans un orifice dédié du support 38 dans lequel elle est montée mobile à coulissement suivant cette direction.

La lame 26 comprend pour chaque soc 40 des moyens de fixation rigides au corps 28, formés en l'espèce pour chaque soc par deux vis de fixation 42 traversant une partie du support et serrant le soc contre une face interne du support. Cet agencement permet de régler la position du soc par rapport au corps 28 suivant la direction précitée et donc de régler la profondeur du sillon 44 réalisé par le soc correspondant dans la bande 4, par exemple suivant le modèle de bandage pneumatique en cours de fabrication.

Les sillons 44 en eux-mêmes sont générés par la pénétration de la base ou petit côté du « L » de chaque soc 40 dans le matériau extrudé formant la bande de gomme. Les sillons sont générés par le fait que la base de chaque soc s'étend en saillie de la face 36 du corps 28, ou plus précisément de certaines zones de cette face, comme illustré à la figure 4. Le petit côté du « L » est orienté de sorte que le soc pénètre sous la partie profilée de la lame d'extrusion. Ce montage particulier permet de disposer la partie amont du soc dans une zone où la pression au sein de la bande n'est pas encore nulle ce qui permet de faciliter la pénétration du soc dans le matériau de la bande ainsi que la qualité du moulage.

La face 36 présente au droit de chaque soc une cavité 45 débordant au-delà du soc de chaque côté de ce dernier. Chacune de ces cavités permet de former de part et d'autre du sillon des bourrelets 46 respectifs en relief formant des surplus de gomme s'étendant en saillie de la partie principale de la face 6. Chaque sillon 44 s'étend donc entre les deux bourrelets 46 associés qui lui sont contigus.

Le nombre de sillons étant en l'espèce égal à cinq, on compte dix bourrelets. Les sillons 44 sont destinés à recevoir les cordons, puis à être comblés comme on le verra plus loin. La face 36 est également conformée pour former des sillons 50 en l'espèce au nombre de trois et destinés à persister de façon visible sur la bande de roulement et sur

le pneumatique final, au contraire des sillons 44. Tous les sillons précités s'étendent parallèlement les uns aux autres et à la direction longitudinale de la bande 4.

Comme illustré à la figure 6, la lame 26 porte, en outre, en l'espèce, deux organes 52 formant des couteaux d'ébarbage du matériau pour délimiter les deux bords latéraux opposés de la bande. Ces organes sont disposés en regard l'un de l'autre, de part et d'autre du support 38.

La machine d'extrusion comprend des moyens 55 pour la réception de bobines 9 sur lesquelles sont enroulés les cordons respectifs. Ces moyens sont agencés de façon à permettre aux bobines de se dévider au fur et à mesure de la fabrication.

L'ensemble de roulettage 30 (voir les figures 6, 9 et 10) comprend des roulettes 32 qui sont en nombre égal, en l'espèce, à celui des cordons, à savoir au nombre de cinq. Les roulettes sont identiques entre elles et montées coaxialement les unes aux autres autour d'un axe horizontal 56. Elles s'étendent en regard de la lame 26 de sorte qu'un trajet 57 des cordons venant des bobines 9 passe entre l'ensemble 30 et la lame 26 avant leur insertion dans la bande de roulement. Au cours de ce trajet, les cordons viennent en appui contre le bord périphérique circonférentiel des roulettes 32 respectives. Chaque roulette sert ainsi à guider le cordon correspondant jusqu'au fond du sillon pour l'y déposer, la roulette pénétrant à cette fin à l'intérieur du sillon correspondant.

Les roulettes 32 sont montées sur un portique commun fixé au bâti et dont la position verticale est réglable afin de faire pénétrer les roulettes plus ou moins profondément dans les sillons, et donc d'insérer les cordons correspondants plus ou moins dans ces derniers. On ne prévoit pas en l'espèce de motorisation pour les roulettes 32, ces dernières étant entraînées en rotation par le défilement de la bande de roulement et les cordons insérés dans cette bande à la même vitesse périphérique que cette dernière. On peut prévoir une pièce de guidage intermédiaire telle qu'un tube traversé suivant son axe par les cordons pour leur guidage depuis les bobines 9 jusqu'à l'ensemble 30.

La figure 7 illustre la bande 4 avec ses sillons 44 ouverts au fond desquels les cordons composites 8 ont été déposés. Il s'agit sur cette figure de cordons à section transversale circulaire d'un diamètre d'environ 4 millimètres. La figure 8 illustre de façon analogue le cas d'une bande 4 dans les sillons 44 de laquelle sont disposés des cordons composites 8 et présentant une section transversale de forme parallélépipédique, par exemple carrée à 4 millimètres de côté.

En référence aux figures 2 et 11 à 14, l'ensemble de roulettage 34 comprend des organes de roulettage dont le nombre égale celui des cordons, à savoir cinq en l'espèce. L'un de ces organes 60 a été illustré à la figure 14. L'ensemble 34 comprend un support 62 rigidement fixé aux montants 14 et s'étendant de l'un à l'autre de ceux-ci. Chacun des organes 60 comprend un mât 64 de forme profilée, reçu dans un orifice femelle correspondant du support 62 en étant mobile à coulissement dans ce dernier suivant sa direction longitudinale qui est proche de la direction radiale à l'axe 24. L'ensemble 34 comprend pour chaque organe un élément de serrage 66 traversant la paroi du support 62 pour serrer le mât 64 contre une face interne du support et ainsi immobiliser l'organe 60 rigidement par rapport au support 62 dans la position de réglage choisie.

Chaque organe 60 comprend à une extrémité inférieure du mât un bras 68 portant deux roulettes dentées 70 montées rotatives sur le bras via des axes de rotation respectifs 72 coplanaires mais sécants et agencés de sorte que les roulettes ont une configuration ouverte vers l'amont par référence au sens de défilement de la bande. Les roulettes sont disposées de façon à venir en appui sur les bourrelets respectifs 46 associés au sillon considéré de façon à rabattre la matière formant ces reliefs dans le sillon par dessus le cordon 8 en vue de combler le sillon 44. Le cordon se trouve donc enfoui, recouvert et noyé dans la bande de roulement comme illustré aux figures 11 et 12 dans les deux cas correspondant aux figures 7 et 8 respectives.

Le procédé de fabrication de la bande de roulement est mis en oeuvre de la façon suivante au moyen de cette machine. Le matériau formant la gomme est amené dans le nez par le conduit 16 suivant la flèche 71, puis passe dans la chambre 25 où il est mis en pression avant d'être extrudé à travers l'orifice d'extrusion formé par la lame 26 et le rouleau 18. Au cours de cette opération qui met notamment en forme la face supérieure 6 de la bande, les socs 40 réalisent les sillons longitudinaux 44 dans la face 6, ainsi que les deux bourrelets 46 situés de part et d'autre de chaque sillon. Les socs se trouvent en partie arrière dans une zone de la machine où la pression est réduite par rapport à la pression régnant dans la chambre 25.

Les bobines 9 portant les cordons se dévident et les cordons guidés et soutenus par les roulettes 32 passent entre celles-ci et la lame 26 pour être insérées au fond des sillons respectifs 44 dans l'épaisseur de la bande de roulement. Les cordons se déroulent des bobines sous l'effet de l'entraînement de la bande qui entraîne également les roulettes 32. La bobine n'est freinée par aucun actionneur au cours de son mouvement.

La matière formant la bande est à ce stade encore chaude et molle. Lorsque la bande passe sous l'ensemble de roulettage 34, les roulettes 70 rabattent la matière des bourrelets 46 dans le sillon correspondant, noyant ainsi le cordon composite associé dans l'épaisseur de la bande de roulement. Le sillon se trouve ainsi bouché et comblé.

Ces opérations ont lieu successivement pour chaque section de bande considérée. Elles ont lieu en même temps pour l'ensemble de la bande, les bandes étant fabriquées en continu.

Essais

Des cordons ont été réalisés et incorporés dans des bandes de roulement de bandages pneumatiques comme décrit ci-dessus. Les formulations du coeur caoutchouteux et de la gaine caoutchouteuse sont données dans le tableau 1. Les quantités sont exprimées en parties pour 100 parties en poids d'élastomère (pce).

Tableau 1

| | Coeur C1 | Gaine G1 |
|---|---|---|
| NR (1) | 100 | 100 |
| Charge A (2) | 50 | |
| Agent de couplage (3) | 5 | |
| Charge B (4) | | 400 |
| Charge A' (5) | | 3 |
| huile plastifiante (6) | | 50 |
| antioxydant (7) | 2 | 2 |
| acide stéarique | 2,5 | 2 |
| oxyde de zinc (8) | 2,7 | 3 |
| accélérateur (9) | 1,8 | 0,9 |
| Soufre | 1,8 | 1,5 |

(1) Caoutchouc naturel ;
(2) Charge A: silice « Zeosil 1165MP » de la société Rhodia, type « HD » ;
(3) Agent de couplage TESPT (« Si69 » de la société Degussa) ;
(4) Charge B : craie, marque « Omya BLS » de la société Omya ;
(5) Charge A' : noir de carbone N330 (grade ASTM - société Degussa) ;
(6) huile TDAE (« Vivatec 500 » de la société Hansen & Rosenthal) ;
(7) N-1,3-diméthylbutyl-N-phénylparaphénylène diamine (Santoflex 6-PPD de la société Flexsys) ;
(8) Oxyde de zinc (grade industriel - société Umicore) ;
(9) N-cyclohexyl-2-benzothiazyl-sulfénamide (« Santocure CBS » de la société Flexsys).

Tableau 2

| | C1 | G1 |
|---|---|---|
| MA10 (MPa) | 4,7 | 4,1 |
| Contrainte rupture (MPa) | 25,6 | 4,0 |
| Déformation rupture (%) | 650 | 680 |

Les matériaux de gaine G1 et de coeur C1 présentent des rigidités à faible déformation (10%) comparables ainsi que des allongement ruptures aussi comparables. En revanche le matériau de la gaine G1 a une contrainte rupture très nettement plus faible que celle du matériau du coeur C1. C'est ce qui permet au cordon de recreusage d'être extrait manuellement sans outillage particulier.

Des bandages pneumatiques pour véhicule poids lourd de dimension 315/70 R 22.5 ont été réalisés comportant dans des cavités circonférentielles de leur bande de roulement des cordons en forme de U de géométrie similaire au cordon 90 de la figure 19 de hauteur et de largeur de l'ordre de 8 mm avec une gaine d'épaisseur environ 0,8 mm, correspondant aux compositions C1-G1. Les gaines entouraient complètement le coeur des cordons. Les cavités ont été formées dans la bande de roulement et les cordons ont été introduits dans celles-ci à cru selon le procédé précédemment décrit. Les cordons étaient disposés au même niveau de la bande de roulement que les zones destinées à être recreusées de façon usuelle avec le fond du U disposé radialement le plus intérieurement.

Les mêmes bandages pneumatiques comportaient aussi dans d'autres cavités similaires de la bande de roulement un cordon composé seulement d'un mélange caoutchouteux similaire à celui de la gaine du cordon composite

selon l'invention.

Ces bandages pneumatiques ont subi tout d'abord pendant 2 000 km un test sur volant sollicitant pour la bande de roulement où l'on alterne des roulages à fortes charge et dérive avec des roulages ligne droite à forte charge. Les bandages pneumatiques et leurs bandes de roulement ont bien résisté.

Les bandes de roulement des bandages pneumatiques ont ensuite été rabotées, c'est-à-dire que la bande de roulement a été usinée pour faire diminuer son épaisseur jusqu'à faire apparaître les gaines des cordons de recreusage. Les bandages pneumatiques ont ensuite subi des tests de comportement sur des pistes à l'état sec ainsi que sur des pistes revêtues d'une épaisseur d'eau.

Ces tests ont consisté en des roulages de quelques dizaines de km à vitesse normale de 90 km/h puis à vitesse limite de 125 km/h sur un circuit à l'état sec. Ensuite, les bandages pneumatiques ont été testés sur un circuit comportant de nombreux virages et revêtu d'eau pour vérifier si l'eau ne vient pas altérer la tenue du cordon dans la cavité.

Lors de tous ces essais, les cordons caoutchouteux selon l'invention sont restés en place dans leurs cavités. Leur ancrage a été suffisant pour éviter tout mouvement relatif entre les cordons et le matériau adjacent de la bande de roulement avant et après rabotage des bandes de roulement. Les cordons ont pu ensuite être enlevés manuellement sans outillage spécifique et en une seule fois. Les rainures ainsi créées dans la bande de roulement ont été propres.

En revanche, les cordons caoutchouteux constitués seulement d'un mélange similaire à celui de la gaine du cordon composite selon l'invention n'ont pas supporté les tests effectués après le rabotage de la bande de roulement. Des morceaux de tailles variées ont progressivement été arrachés et d'autres sont restés accrochés dans leurs cavités.

Les cordons de recreusage selon l'invention ont ainsi l'avantage de permettre une bonne maîtrise de leur géométrie avant et après la confection du bandage pneumatique, de redonner une apparence propre de la sculpture après leur extraction et d'avoir une grande facilité de réalisation industrielle.

## Revendications

1. Cordon composite (80 - 82, 90 - 92) comportant un coeur caoutchouteux (83,93) et une gaine caoutchouteuse entourant (84 - 86, 94 - 96) au moins en partie, le coeur, les formulations du coeur et de la gaine étant différentes, **caractérisé en ce que** ledit coeur caoutchouteux est à base d'au moins :

   - un élastomère diénique ; et
   - plus de 30 parties en poids pour cent parties d'élastomère d'une charge notée A dont les particules sont des nanoparticules dont la taille moyenne en masse est inférieure à 500 nm ;

   et **en ce que** ladite gaine caoutchouteuse est à base d'au moins :

   - un élastomère diénique ;
   - de 0 à moins de 30 parties en poids pour cent parties d'élastomère de charge A' dont les particules sont des nanoparticules dont la taille moyenne en masse est inférieure à 500 nm ; et
   - plus de 70 partie en poids pour cent parties d'élastomère d'une charge notée B dont les particules sont des microparticules dont la taille médiane en masse est supérieure à 1 $\mu$m.

2. Cordon composite selon la revendication 1, dans lequel chaque élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

3. Cordon composite selon l'une des revendications 1 et 2, dans lequel la charge A ou la charge A' comportent du noir de carbone.

4. Cordon composite selon l'une quelconque des revendications 1 à 3, dans lequel la charge A ou la charge A' comportent une charge inorganique.

5. Cordon composite selon la revendication 4, dans lequel la charge inorganique est de la silice.

6. Cordon composite selon l'une quelconque des revendications précédentes, dans lequel la quantité de charge A' dans la gaine caoutchouteuse est inférieure à 10 parties en poids pour cent parties d'élastomère.

7. Cordon composite selon l'une quelconque des revendications précédentes, dans lequel la quantité de charge B dans la gaine caoutchouteuse est supérieure à 100 parties en poids pour cent parties d'élastomère.

8. Cordon composite selon l'une quelconque des revendications précédentes, dans lequel la charge B est choisie

dans le groupe constitué par la craie, les carbonates de calcium synthétiques, le kaolin et les mélanges de ces composés.

**9.** Cordon composite selon l'une quelconque des revendications précédentes, tel que sa plus grande dimension dans toute section droite est comprise entre 3 et 20 mm.

**10.** Cordon composite selon l'une quelconque des revendications précédentes, dans lequel l'épaisseur de la gaine caoutchouteuse est comprise entre 0,3 et 1,5 mm.

**11.** Cordon composite selon l'une quelconque des revendications précédentes, dans lequel la gaine caoutchouteuse recouvre plus de 50 % de la surface extérieure du coeur caoutchouteux.

**12.** Cordon composite selon l'une quelconque des revendications précédentes, dans lequel la gaine caoutchouteuse (85) a une forme de tore ouvert.

**13.** Cordon composite selon l'une quelconque des revendications 1 à 11, tel que ledit cordon composite a un contour de section droite carré ou rectangulaire et tel que la gaine caoutchouteuse est disposée le long de trois des côtés du contour.

**14.** Cordon composite selon l'une quelconque des revendications précédentes, dans lequel la gaine caoutchouteuse comporte des discontinuités axiales.

**15.** Bandage pneumatique ou non-pneumatique comprenant un sommet avec une armature de sommet et une bande de roulement, **caractérisé en ce que** ladite bande de roulement comporte dans au moins une cavité circonférentielle interne un cordon composite (8) selon l'une quelconque des revendications 1 à 14.

**16.** Utilisation d'un cordon composite selon l'une quelconque des revendications 1 à 14 comme cordon de recreusage d'une bande de roulement d'un bandage pneumatique ou non-pneumatique.

**Patentansprüche**

**1.** Verbundmaterialsteg (80-82, 90-92), welcher einen kautschukartigen Kern (83, 93) und einen kautschukartigen Mantel (84-86, 94-96), welcher den Kern wenigstens teilweise umgibt, aufweist, wobei die Rezepturen des Kerns und des Mantels unterschiedlich sind, **dadurch gekennzeichnet, dass** der kautschukartige Kern auf der Basis von wenigstens:

- einem Dienelastomer; und
- mehr als 30 Gewichtsteilen eines mit A bezeichneten Füllstoffs, dessen Partikel Nanopartikel sind, deren mittlere Größe (auf die Masse bezogen) kleiner als 500 nm ist, auf hundert Teile Elastomer,

hergestellt ist, und dadurch, dass der kautschukartige Mantel auf der Basis von wenigstens:

- einem Dienelastomer;
- 0 bis weniger als 30 Gewichtsteilen eines mit A' bezeichneten Füllstoffs, dessen Partikel Nanopartikel sind, deren mittlere Größe (auf die Masse bezogen) kleiner als 500 nm ist, auf hundert Teile Elastomer; und
- mehr als 70 Gewichtsteilen eines mit B bezeichneten Füllstoffs, dessen Partikel Mikropartikel sind, deren Medianwert der Größe (auf die Masse bezogen) größer als 1 $\mu$m ist, auf hundert Teile Elastomer,

hergestellt ist.

**2.** Verbundmaterialsteg nach Anspruch 1, wobei jedes Dienelastomer aus der Gruppe ausgewählt ist, welche aus den Polybutadienen, Naturkautschuk, den Synthesepolyisoprenen, den Butadiencopolymeren, den Isoprencopolymeren und den Mischungen dieser Elastomere besteht.

**3.** Verbundmaterialsteg nach einem der Ansprüche 1 und 2, wobei der Füllstoff A oder der Füllstoff A' Ruß umfasst.

**4.** Verbundmaterialsteg nach einem der Ansprüche 1 bis 3, wobei der Füllstoff A oder der Füllstoff A' einen anorganischen Füllstoff umfasst.

**5.** Verbundmaterialsteg nach Anspruch 4, wobei der anorganische Füllstoff Siliciumdioxid ist.

6. Verbundmaterialsteg nach einem der vorhergehenden Ansprüche, wobei die Menge des Füllstoffs A' in dem kautschukartigen Mantel kleiner als 10 Gewichtsteile auf hundert Teile Elastomer ist.

7. Verbundmaterialsteg nach einem der vorhergehenden Ansprüche, wobei die Menge des Füllstoffs B in dem kautschukartigen Mantel größer als 100 Gewichtsteile auf hundert Teile Elastomer ist.

8. Verbundmaterialsteg nach einem der vorhergehenden Ansprüche, wobei der Füllstoff B aus der Gruppe ausgewählt ist, welche aus Kreide, den synthetischen Calciumcarbonaten, Kaolin und den Mischungen dieser Verbindungen besteht.

9. Verbundmaterialsteg nach einem der vorhergehenden Ansprüche, wobei seine größte Abmessung in jedem geraden Querschnitt zwischen 3 und 20 mm liegt.

10. Verbundmaterialsteg nach einem der vorhergehenden Ansprüche, wobei die Dicke des kautschukartigen Mantels zwischen 0,3 und 1,5 mm liegt.

11. Verbundmaterialsteg nach einem der vorhergehenden Ansprüche, wobei der kautschukartige Mantel mehr als 50 % der Außenfläche des kautschukartigen Kerns bedeckt.

12. Verbundmaterialsteg nach einem der vorhergehenden Ansprüche, wobei der kautschukartige Mantel (85) die Form eines offenen Torus hat.

13. Verbundmaterialsteg nach einem der Ansprüche 1 bis 11, wobei der Verbundmaterialsteg einen quadratischen oder rechteckigen Umriss des geraden Querschnitts aufweist, und wobei der kautschukartige Mantel entlang von drei der Seiten des Umrisses angeordnet ist.

14. Verbundmaterialsteg nach einem der vorhergehenden Ansprüche, wobei der kautschukartige Mantel axiale Diskontinuitäten aufweist.

15. Pneumatischer oder nicht-pneumatischer Reifen, der einen Scheitel mit einer Scheitelbewehrung und einen Laufstreifen aufweist, **dadurch gekennzeichnet, dass** der Laufstreifen in mindestens einem inneren umfänglichen Hohlraum einen Verbundmaterialsteg (8) nach einem der Ansprüche 1 bis 14 aufweist.

16. Verwendung eines Verbundmaterialstegs nach einem der Ansprüche 1 bis 14 als Nachschneidsteg eines Laufstreifens eines pneumatischen oder nichtpneumatischen Reifens.

## Claims

1. Composite cord (80-82, 90-92) comprising a rubber core (83, 93) and a rubber sheath (84-86, 94-96) surrounding, at least in part, the core, the formulations of the core and of the sheath being different, **characterized in that** the said rubber core is based on at least:

   - one diene elastomer; and
   - more than 30 parts by weight per hundred parts of elastomer of a filler denoted A, the particles of which are nanoparticles having a weight-average size of less than 500 nm;

   and **in that** the said rubber sheath is based on at least:

   - one diene elastomer;
   - from 0 to less than 30 parts by weight per hundred parts of elastomer of filler A', the particles of which are nanoparticles having a weight-average size of less than 500 nm; and
   - more than 70 parts by weight per hundred parts of elastomer of a filler denoted B, the particles of which are microparticles having a weight-median size of greater than 1 μm

2. Composite cord according to Claim 1, in which each diene elastomer is selected from the group consisting of polybutadienes, natural rubber, synthetic polyisoprenes, butadiene copolymers, isoprene copolymers and the mixtures of these elastomers.

3. Composite cord according to either of Claims 1 and 2, in which the filler A or the filler A' comprise carbon black.

4. Composite cord according to any one of Claims 1 à 3, in which the filler A or the filler A' comprise an inorganic filler.

5. Composite cord according to Claim 4, in which the inorganic filler is silica.

6. Composite cord according to any one of the preceding claims, in which the amount of filler A' in the rubber sheath is less than 10 parts by weight per hundred parts of elastomer.

7. Composite cord according to any one of the preceding claims, in which the amount of filler B in the rubber sheath is greater than 100 parts by weight per hundred parts of elastomer.

8. Composite cord according to any one of the preceding claims, in which the filler B is selected from the group consisting of chalk, synthetic calcium carbonates, kaolin and the mixtures of these compounds.

9. Composite cord according to any one of the preceding claims, such that its greatest dimension in any cross section is between 3 and 20 mm.

10. Composite cord according to any one of the preceding claims, in which the thickness of the rubber sheath is between 0.3 and 1.5 mm.

11. Composite cord according to any one of the preceding claims, in which the rubber sheath covers more than 50% of the external surface of the rubber core.

12. Composite cord according to any one of the preceding claims, in which the rubber sheath (85) has an open torus shape.

13. Composite cord according to any one of Claims 1 to 11, such that the said composite cord has a square or rectangular cross-sectional outline and such that the rubber sheath is positioned along three of the sides of the outline.

14. Composite cord according to any one of the preceding claims, in which the rubber sheath comprises axial discontinuities.

15. Pneumatic or nonpneumatic tyre comprising a crown with a crown reinforcement and a tread, **characterized in that** the said tread comprises, in at least one internal circumferential cavity, a composite cord (8) according to any one of Claims 1 to 14.

16. Use of a composite cord according to any one of Claims 1 to 14 as regrooving cord of a tread of a pneumatic or non-pneumatic tyre.

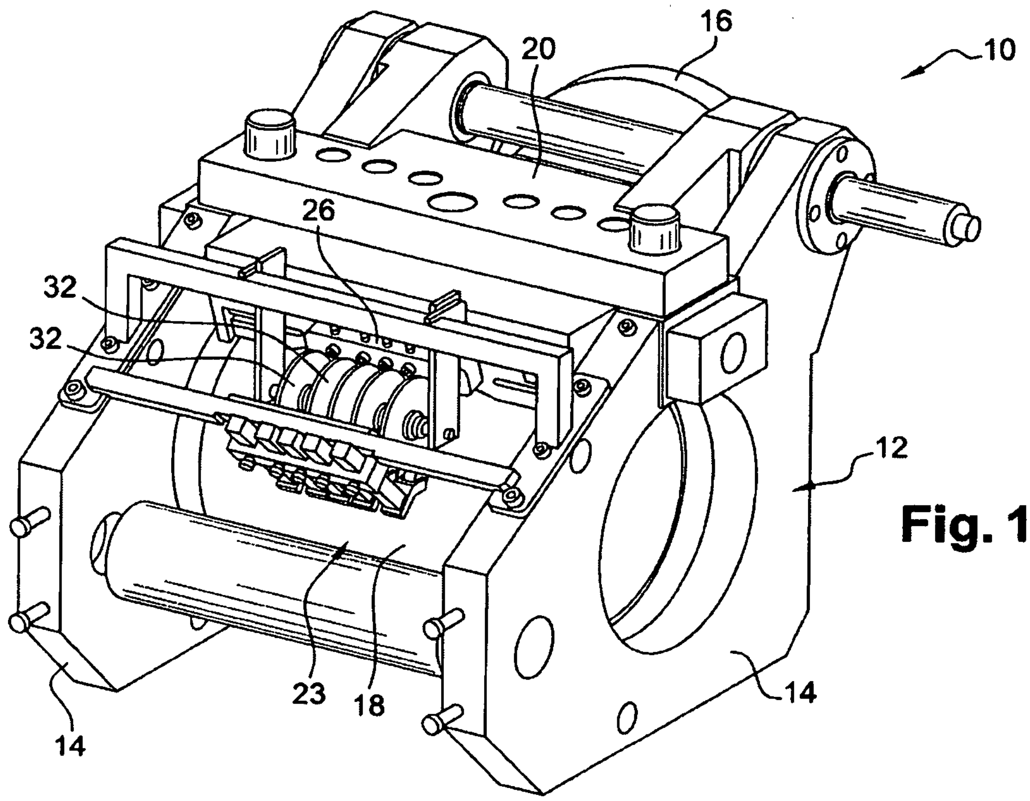
10
16
20
26
32
32
12
23
18
14
14

Fig. 1

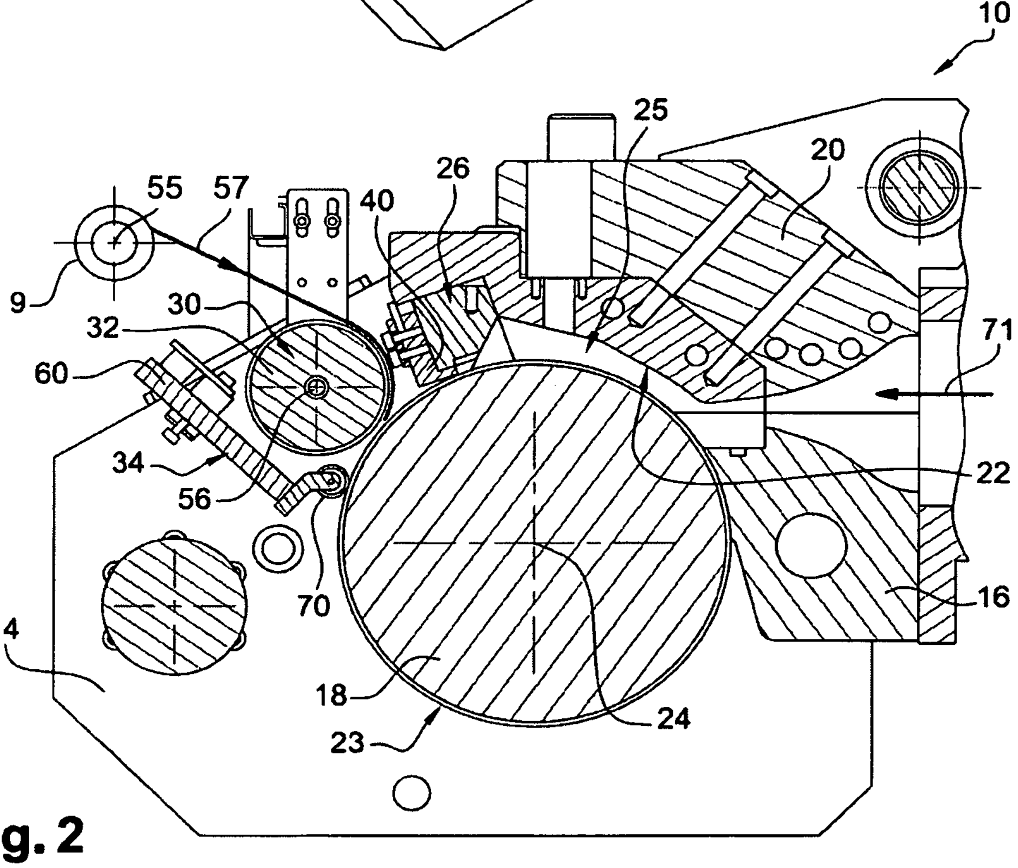
10
25
20
26
55
57
40
9
30
71
32
60
34
22
56
70
16
14
18
24
23

Fig. 2

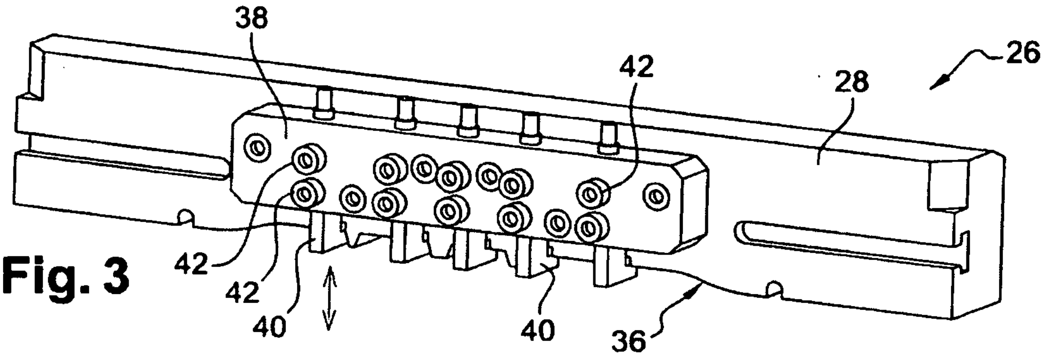


Fig. 3

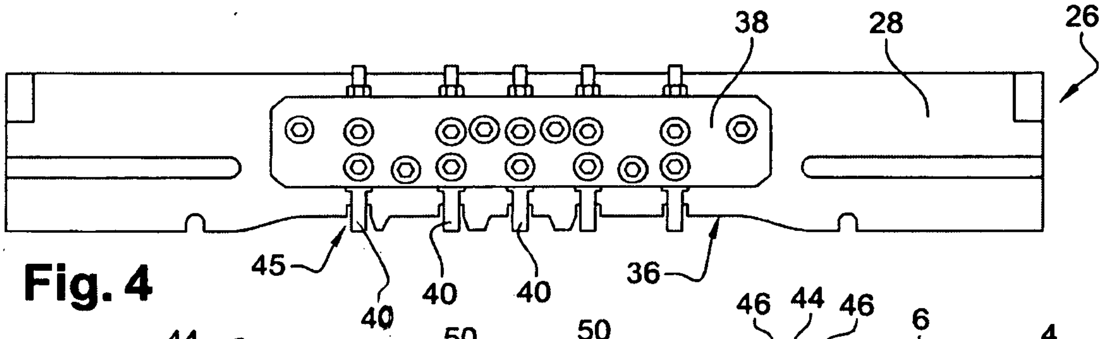


Fig. 4

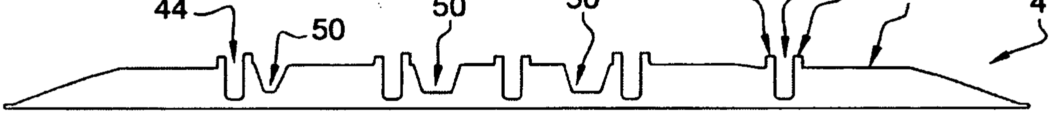


Fig. 5

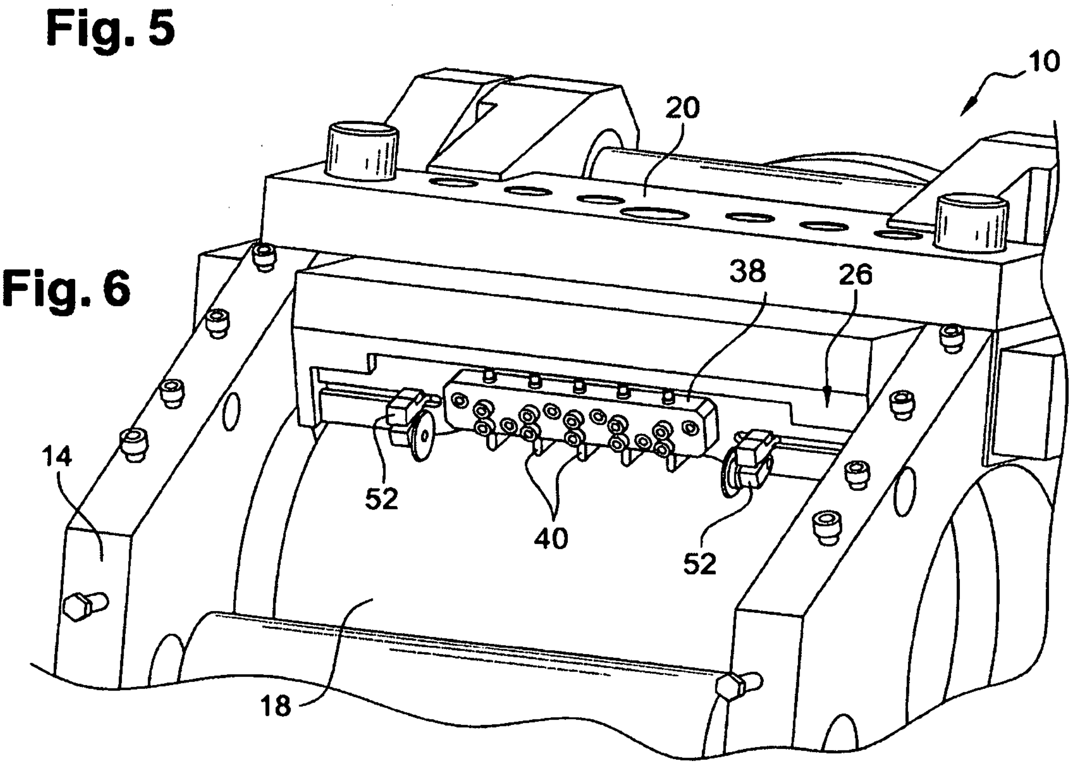


Fig. 6

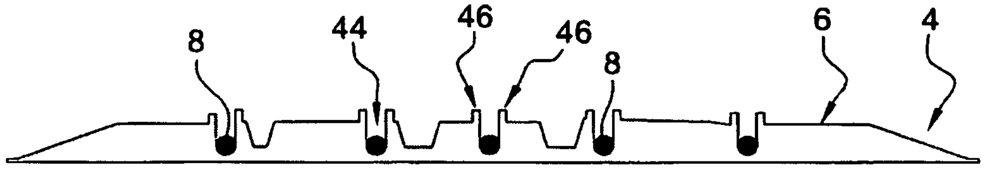


Fig. 7

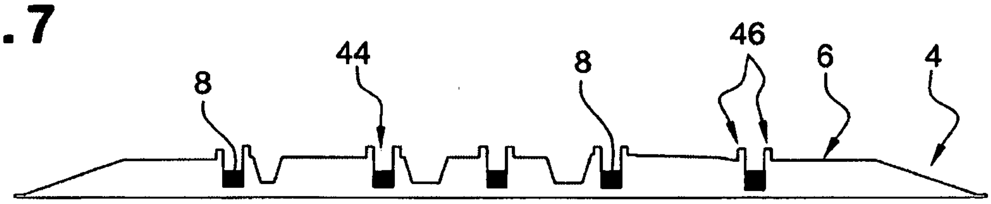


Fig. 8

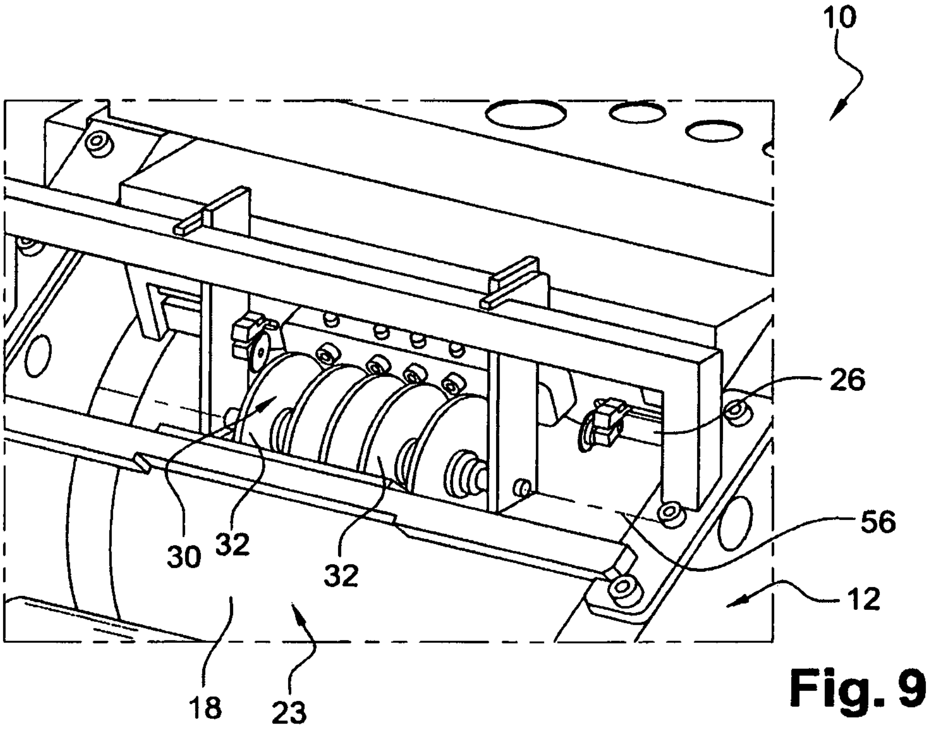


Fig. 9

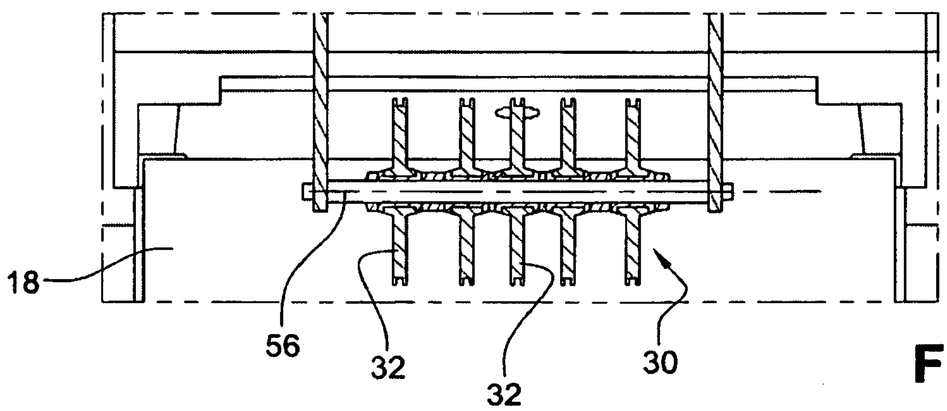


Fig. 10

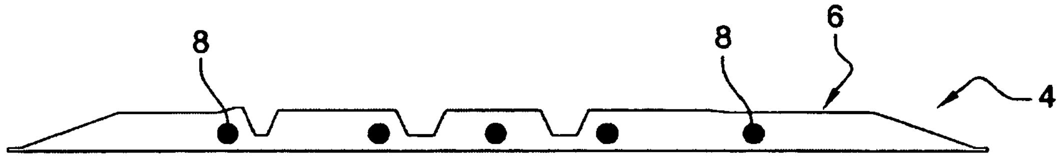


Fig. 11

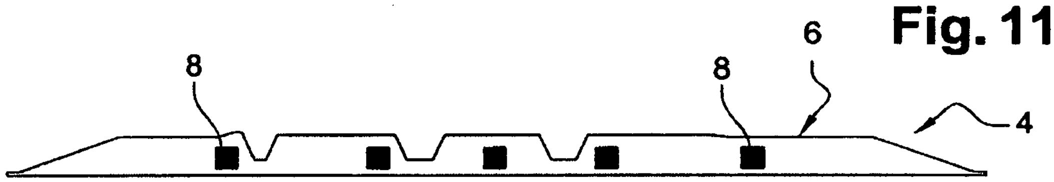


Fig. 12

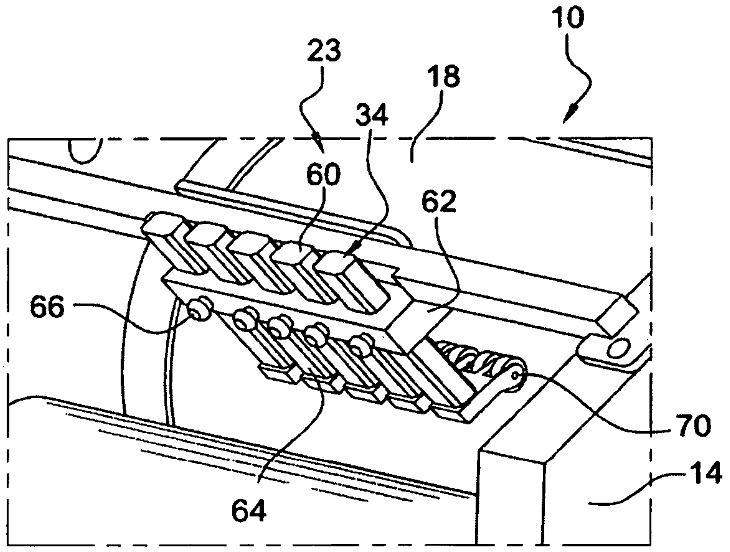


Fig. 13

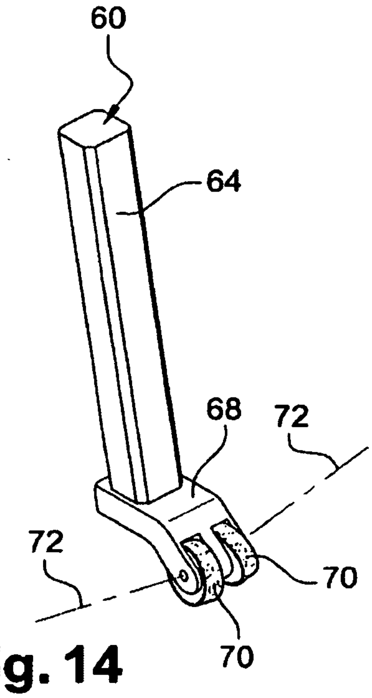


Fig. 14

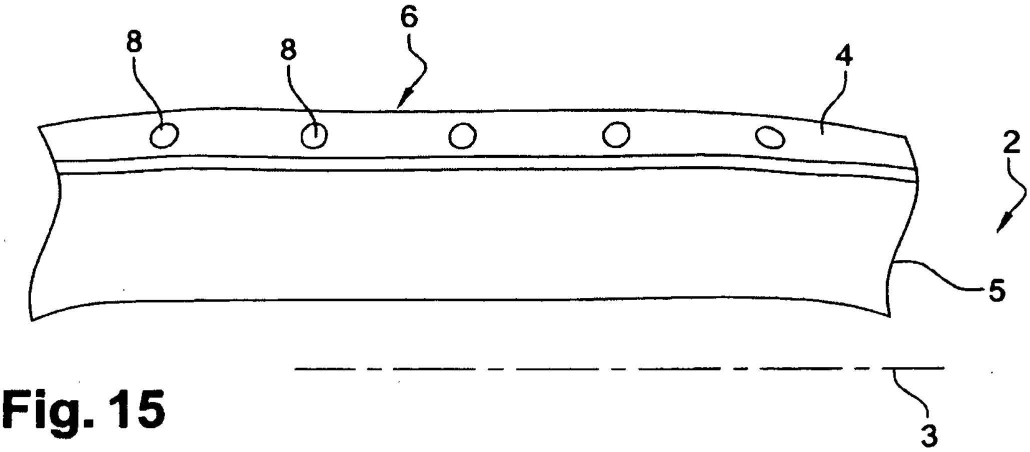


Fig. 15

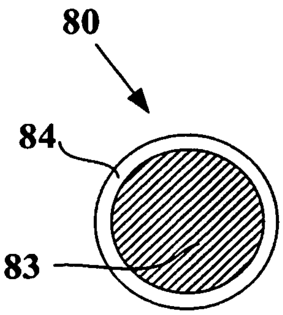

Fig. 16

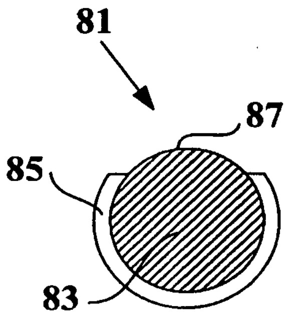

Fig. 17

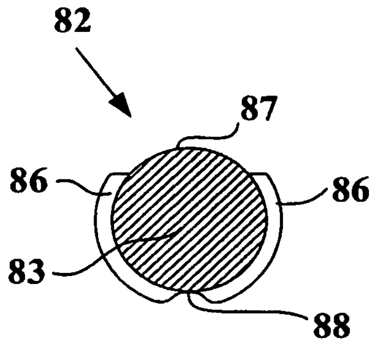

Fig. 18

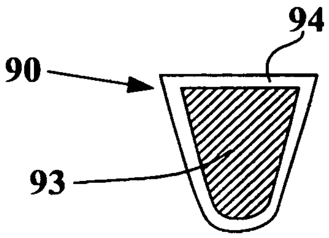

Fig. 19

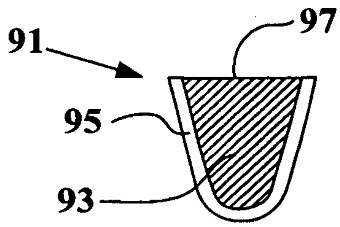

Fig. 20

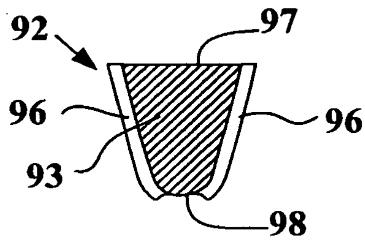

Fig. 21

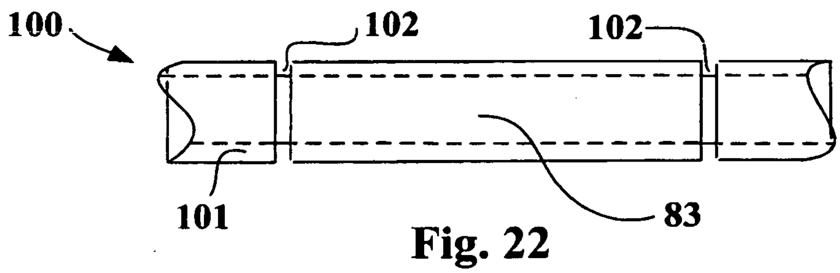

Fig. 22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6003576 A
- US 2148343 A
- US 2003034104 A
- US 2544868 A
- EP 1392497 B1
- US 5804307 A
- FR 2740778
- US 6013718 A
- FR 2765882
- US 5977238 A
- US 20050203251 A
- JP 2001158834 B
- JP 2005232367 B
- EP 1457501 A1
- WO 09133068 A
- WO 0192402 A
- US 6815473 B
- WO 2004096865 A
- US 20060089445 A
- EP 1127909 A
- US 6503973 B
- WO 9736724 A
- WO 9916600 A
- WO 2006069792 A
- WO 2006069793 A
- WO 0316387 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A
- WO 2005087859 A
- WO 2006061064 A
- WO 2007017060 A